# FASCICULE DE BREVET EUROPEEN

(11) **EP 4 299 271 B1**
(45) Date de publication et mention de la délivrance du brevet: **21.08.2024**
(21) Numéro de dépôt: 23181824.6
(22) Date de dépôt: 27.06.2023
(51) Int. Cl.: B29B 17/02, C08J 11/08, B29K 27/06, B29K 105/00

(54) **PROCEDE D'EPURATION D'UN PVC COMPRENANT DES METAUX LOURDS**
VERFAHREN ZUR REINIGUNG VON SCHWERMETALLHALTIGEM PVC
PROCESS FOR PURIFYING A PVC CONTAINING HEAVY METALS

(30) Priorité: 28.06.2022 FR 2206471
(43) Date de publication de la demande: 03.01.2024
(73) Titulaire: Kem One, 69008 Lyon (FR)
(72) Inventeur: LAURENT, Mickaël, 69007 Lyon (FR); MOREL, Patrick, 38090 Roche (FR); GRISON, Claude, 34170 Castelnau le Nez (FR); DEYRIS, Pierre-Alexandre, 34230 Le Pouget (FR)
(74) Mandataire: Lavoix

(56) Documents cités:
- WO-A1-92/05215
- FR-A1- 2 878 250
- JP-A- 2009 096 869
- JP-A- 2009 096 870

## Description

La présente invention concerne un procédé pour l'épuration d'un polymère du chlorure de vinyle (PVC) comprenant au moins un composé d'un métal lourd. L'invention vise l'extraction de métaux lourds de formulations de PVC et la récupération de PVC ou de compound de PVC exempt de composés de métaux lourds comme en particulier le Pb et le Cd. Le procédé a notamment pour objectif de traiter des articles en PVC ou contenant du PVC en fin de vie afin de les recycler tout en respectant les réglementations en vigueur concernant les taux de métaux lourds.

En effet et avant 2010, de nombreux articles en PVC fabriqués en Europe contenaient des systèmes stabilisants à base de sels de plomb et / ou de cadmium dans le but de protéger le polymère contre sa dégradation thermique lors de la transformation. L'engagement volontaire des producteurs européens de PVC a permis une élimination complète de ces systèmes dans l'ensemble des applications du PVC, qu'il s'agisse du plomb comme du cadmium à partir des années 2010. La réglementation européenne limite désormais l'utilisation du plomb et du cadmium dans les l'ensemble des applications du PVC. A titre d'exemple, le plomb contenu dans les formulations en PVC aujourd'hui commercialisées ne peut dépasser la teneur de 0.1% en poids et de 0,01% pour le cadmium. Cette limite a pour conséquence de limiter l'utilisation d'anciens profilés de fenêtres ce qui constitue un barrage à leur recyclabilité.

Les brevets FR2878249 et FR2878250 décrivent un procédé pour l'épuration en métaux lourds de PVC basé également sur une dissolution sélective du PVC. Ils présentent toutefois l'inconvénient d'avoir recours à des solvants qui ne sont pas bio-sourcés et qui présentent des niveaux de toxicité élevés comme la méthyl-éthyl-cétone (MEK) ou le tétrahydrofurane (THF). Le brevet FR2878249 forme un mélange biphasique avec une phase continue formée de la dissolution du PVC dans un solvant organique et une phase aqueuse dispersée contenant les métaux lourds et un agent dispersant ou une base telle que NaOH. Concernant l'étape de séparation des métaux, le brevet FR2878250 revendique la centrifugation de la solution de PVC pour réduire la quantité de plomb dans le PVC mais ce procédé ne fonctionne correctement que lorsque des réactifs de type Fe₃O4, EDTA, Na₃EDTA sont préalablement ajoutés à la solution pour adsorber ou complexer les sels de plomb.

Un objectif de l'invention est de proposer un procédé d'épuration utilisant au maximum des produits respectueux de l'environnement, et aptes à être recyclés dans le procédé.

Un autre objectif de l'invention est de proposer un procédé efficace, rapide et peu coûteux.

D'autres objectifs de l'invention apparaîtront à la lecture de la description qui suit.

### Résumé de l'invention

La présente invention concerne un procédé d'épuration d'un polymère de chlorure de vinyle (PVC) comprenant au moins un composé d'un métal toxique, en particulier un composé d'un métal lourd, tel que le plomb. Ces composés peuvent être de différentes nature, ils sont généralement sous forme de sels ou d'oxydes de métal, notamment des sels organiques tels que les stéarates neutres [Pb(St)₂], les stéarates dibasiques [2PbO.(St)₂Pb], les phosphites dibasiques [2PbO.PbPO₃.1/2H₂O], les sulfates tribasiques [3PbO.PbSO₄.H₂O], des oxydes tels que PbO et Pb(OH)₂, des carboxylates de cadmium ou de baryum, par exemple. Les métaux visés par l'invention sont notamment ceux que l'on regroupe usuellement sous l'appellation métaux lourds, et comprenant arsenic (As), cadmium (Cd), chrome (Cr), cuivre (Cu), manganèse (Mn), mercure (Hg), nickel (Ni), plomb (Pb), sélénium (Se), zinc (Zn), auxquels on peut ajouter le baryum.

Le procédé est basé sur une dissolution du PVC dans un solvant organique reposant sur les 12 principes des solvants verts, le MeTHF s'avérant particulièrement efficace à cet égard. Après cette étape préliminaire, les métaux lourds sont séparés de la solution organique, soit par centrifugation, soit, après solubilisation et transfert dans une phase aqueuse, puis vient une précipitation du PVC dans des conditions spécifiques liées à la nature du solvant.

Dans le cadre de l'invention, le PVC à traiter peut-être de toute nature, qu'il soit rigide, plastifié, composite, ou combiné à d'autres matériaux. Les PVC peuvent être issus des profilés de fenêtres, bardages, clôtures et tout article en PVC rigide et souple utilisés dans le bâtiment, y compris les canalisations et raccords, et les gaines de câbles. L'épuration en métaux lourds est principalement réalisée sur des articles PVC en fin de vie. Le matériau peut subir des opérations visant à éliminer les matériaux qui ne seraient pas du PVC. Le PVC est avantageusement broyé en amont du procédé, c'est-à-dire avant sa dissolution, le broyage facilitant cette dernière. Cependant, la robustesse du procédé permet aussi de séparer les éléments solides indésirables qui n'auraient pas été complètement retirés lors des étapes de tri, au cours de la conduite du procédé.

La présente invention a donc pour objet un procédé d'épuration d'un polymère de chlorure de vinyle (PVC) comprenant au moins un composé d'un métal lourd, notamment sous forme de sel du métal, tel que le plomb, selon lequel :
a. on met le PVC en solution dans le 2-Méthyl-Tétrahydrofurane (MeTHF) dans un réacteur, de préférence agité;
b. on effectue un traitement qui conduit à la séparation des métaux, notamment des métaux lourds, de la solution de PVC ;
c. on provoque la précipitation du PVC par ajout à la solution de PVC d'un mélange précipitant comprenant de l'eau, un agent compatibilisant augmentant la miscibilité de l'eau dans le MeTHF,
d. on récupère un gâteau de PVC précipité épuré du composé de métal lourd,
e. on sèche le gâteau et on récupère une poudre de PVC ou de compound de PVC.

Le procédé d'épuration produit une poudre de PVC ou de compound de PVC, qui se caractérise par le fait d'être exempt ou sensiblement exempt de métal lourd, notamment de plomb et/ou de cadmium. Par « sensiblement exempt », on entend qu'il est possible d'obtenir des teneurs résiduelles très basses, de préférence respectant certaines normes en vigueur, notamment une teneur de moins de 0.1% en poids pour le plomb et/ou de moins de 0,01% pour le cadmium. On peut aussi exprimer le procédé d'épuration selon l'invention comme étant un procédé de production d'une poudre de PVC ou de compound de PVC exempt de métal lourd à partir d'un polymère de chlorure de vinyle (PVC) comprenant au moins un composé d'un métal lourd. Ce procédé comprend les étapes successives a. à e. décrites ici.

De manière préférée, au cours de l'étape c., on effectue un stripping de manière à évaporer et extraire progressivement le solvant ; notamment on injecte de la vapeur d'eau pour augmenter la température et induire ce stripping. Ce stripping, notamment par injection de vapeur d'eau, peut débuter dès l'introduction du mélange précipitant ou peu après, et les conditions optimales peuvent être déterminées par l'homme du métier.

Le procédé comprend donc avantageusement une étape c. de précipitation du PVC, par ajout à la solution de PVC d'un mélange précipitant comprenant de l'eau, un agent compatibilisant augmentant la miscibilité de l'eau dans le MeTHF, suivi de l'injection de vapeur d'eau et du stripping du solvant.

Le procédé selon l'invention peut comprendre en plus une ou plusieurs des caractéristiques suivantes :
- à l'étape a., on introduit du PVC dans le réacteur agité à raison de 1 à 20 % massique par rapport au solvant MeTHF ;
- à l'étape a., on introduit du PVC dans le réacteur agité pour le dissoudre dans le solvant, le PVC étant à une concentration allant d'environ 10 à environ 80 g/L, de préférence d'environ 20 à environ 40 g/L, par rapport au solvant ; cette concentration s'avère particulièrement appropriée pour conférer au mélange une viscosité optimale pour réaliser une séparation des composés de métal par centrifugation ;
- à l'étape a., on introduit du PVC sous forme de broyats, de poudre, notamment micronisée, ou sous forme de granulés ;
- l'étape b. comprend une centrifugation permettant de séparer le composé de métal lourd de la solution de PVC ; de préférence, la centrifugation applique une force d'au moins environ 2000 G ;
- l'étape b. comprend l'introduction dans le réacteur agité d'une solution aqueuse de base ou d'acide, notamment d'une base forte ou d'un acide fort, de préférence de 0,8 à 2,0mol/L, conduisant à la formation d'une phase aqueuse séparée de la solution de PVC et dans laquelle le composé de métal lourd est solubilisé ;
- l'étape b. comprend l'ajout, en plus de la base ou de l'acide, d'un ou plusieurs complexants, tel qu'un sel d'EDTA, ou un mélange de sels d'EDTA différents ;
- à l'étape c., l'agent compatibilisant est, ou comprend de, l'isopropanol, ou du dioxolane ;
- à l'étape c., l'agent compatibilisant, notamment l'isopropanol ou le dioxolane, est utilisé à raison de 18 à 27% massique par rapport au solvant MeTHF ;
- à l'étape c., on effectue un stripping du réacteur permettant de récupérer, d'une part, un distillat de MeTHF, d'agent compatibilisant et d'eau, et, d'autre part, un précipité humide de PVC contenant des teneurs résiduelles en eau, MeTHF et/ou agent compatibilisant ;
- à l'étape d., on effectue une filtration permettant de récupérer d'une part, une phase liquide contenant du MeTHF, et, d'autre part, un précipité de PVC humide ; ce dernier peut ensuite être lavé avec de l'eau, puis séché ;
- on procède à la séparation du MeTHF, de l'isopropanol et de l'eau à partir du distillat, et du recyclage de tout ou partie du MeTHF, et éventuellement de l'isopropanol et de l'eau, notamment, le MeTHF est régénéré et recyclé comme complément du solvant MeTHF à l'étape a.

D'autres caractéristiques encore de l'invention apparaîtront à la lecture de la description détaillée qui suit.

### Description détaillée

### Etape a. Dissolution du PVC dans le solvant organique

Le procédé consiste, dans une première étape a., à solubiliser le PVC dans le 2-Méthyl-Tétrahydrofurane (MeTHF) (CAS n° 96-47-9). Ses propriétés physico-chimique, avec un faible point d'ébullition, une faible miscibilité avec l'eau (à hauteur de 4% massique) et son fort pouvoir solvant, sont mises à profit dans le procédé.

Toutefois, comme on le verra plus loin, contrairement à ce qui se passe avec une partie des solvants classiques, lors de la précipitation du PVC, l'ajout d'eau dans le réacteur ne suffit pas à casser la solubilité du PVC avec le MeTHF, et il a fallu trouver une solution pour résoudre cette difficulté.

L'étape de dissolution est notamment réalisée dans un réacteur agité et chauffé, avantageusement un réacteur chauffé à l'aide d'une double enveloppe. Le réacteur est de préférence de forme cylindrique. Il est très bien agité, et il s'agit notamment d'un réacteur équipé d'un mobile d'agitation associé à des contres-pales pour assurer une agitation efficace. Un mobile d'agitation de type hélice peut être utilisé. La vitesse d'agitation peut varier selon la géométrie du réacteur et des éléments qui le composent, mais il est préférable d'avoir un régime turbulent pour assurer une agitation homogène.

Donc, suivant une caractéristique de l'invention, l'étape de dissolution du PVC est réalisée dans le solvant en régime turbulent.

Suivant un aspect préféré, le solvant est introduit en premier dans le réacteur qui se trouve à l'état froid ou à une température de réacteur, notamment de sa double enveloppe, ne dépassant pas les 60°C afin d'éviter l'évaporation du solvant et un important dégagement de vapeur. La température du réacteur peut donc être comprise entre 20 et 60°C au stade d'introduction du solvant. Le solvant peut être introduit pur, ou alors en coupage direct avec du solvant recyclé d'opérations précédentes, notamment une partie de distillat issu du stripping des opérations précédentes, dans le cas d'une utilisation en boucle. Dans ce cas-là, le distillat peut facilement être introduit jusqu'à environ 50% en masse, en modifiant seulement le temps de dissolution (qui sera notamment augmenté). On peut aussi intégrer une concentration de distillat supérieure à 50%, dans ce cas on pourra augmenter la pression du réacteur dans le but d'augmenter le point d'ébullition du solvant, et donc la cinétique de dissolution.

Le PVC est ensuite introduit dans le réacteur agité. La masse de PVC ajouté est notamment comprise entre environ 1 et environ 20% massique de la quantité de solvant. Suivant une caractéristique, s'il s'agit de PVC rigide, on peut introduire une quantité d'environ 6 à environ 15% massique de PVC. Suivant une autre caractéristique, s'il s'agit d'un PVC plastifié, on peut introduire une quantité de 6 à 20% massique de PVC.

Une fois le PVC ajouté, le solvant MeTHF (ou mélange solvant ou phase organique si une partie de distillat a été ajouté) est porté à sa température d'ébullition ou à une température qui est juste inférieure à son point d'ébullition, notamment d'environ 75 à environ 80°C, en conservant une agitation constante dans le réacteur. La durée de dissolution va dépendre d'autres paramètres à l'instar de la température de la double enveloppe, la géométrie du réacteur, la vitesse d'agitation, la quantité de PVC, la quantité de distillat utilisé si tel est le cas, et tous les autres paramètres pouvant influencer la dissolution du PVC.

Une fois la dissolution terminée, il est préférable de réaliser une filtration dans le cas où les matériaux entrants sont issus de produit en fin de vie contenant des éléments solides et/ou des impuretés. Cela permet d'éliminer certaines impuretés qui pourraient empêcher la transformation du compound PVC par la suite, ou dans une moindre mesure dégrader la qualité du produit recyclé obtenu.

### Etape b. Séparation des composés de métaux lourds

Une fois l'opération précédente terminée, on procède à l'étape b. à la séparation des composés aux métaux lourds et notamment les composés avec du Pb, de la solution de PVC. Deux méthodes particulièrement efficaces peuvent être employées, b1. et b2.

Etape b1. Dans un premier mode de réalisation de l'étape b., on introduit une solution aqueuse d'acide ou de base, notamment acide fort ou base forte, de manière à solubiliser les composés du métal tel que le plomb et d'éventuels autres métaux. Notamment cette solution a une concentration d'acide ou de base comprise entre environ 0,8 et environ 2,0mol/L. Notamment, on introduit un volume de cette solution correspondant à environ 15 à environ 25%, typiquement environ 20% du volume de solvant (ou phase organique) introduit pour la dissolution. Les composés organiques de plomb ou autres métaux vont alors être minéralisés et se solubiliser dans la phase aqueuse. Les oxydes de métaux vont se solubiliser. Selon la concentration et la géométrie du réacteur (mobile, contre-pale, etc.) la cinétique de réaction va varier, mais l'utilisation de solvant MeTHF permet une cinétique de réaction remarquablement très rapide avec des durées comprises entre environ 5 et environ 20 min. Il a été remarqué que cette étape est particulièrement efficace lorsque la soude (NaOH) ou l'acide chlorhydrique (HCl) sont utilisés comme réactif. On utilise donc de préférence de la NaOH ou de l'HCl. Comme autres acides utilisables industriellement, on peut citer l'acide sulfurique et l'acide nitrique. Côté bases utilisables industriellement, on peut citer l'hydroxyde de potassium (KOH).

Suivant une caractéristique avantageuse du procédé, la phase de séparation ou extraction des composés de métaux lourds comprend ce traitement de la solution de PVC agitée par cette solution aqueuse d'acide ou de base, de préférence HCl ou NaOH, sur une durée courte, notamment une durée inférieure ou égale à environ 30, environ 25 ou environ 20 minutes, typiquement comprise entre environ 5 et environ 20 minutes.

En complément de l'acide ou de la base, un complexant, notamment un composé de l'EDTA (acide éthylène diaminetrétra-acétique), peut être ajouté pour accroître encore l'efficacité. Il peut notamment s'agir d'un sel trisodique d'EDTA, d'un sel tétrasodique d'EDTA, ou d'un mélange de ces deux sels ou avec un autre sel d'EDTA. D'autres complexants sont utilisables, comme l'octadentate hydroxypyridinonate (3,4,3-LI(1,2-HOPO)), ou l'acide éthylènediamine-N,N'-disuccinique (EDDS). L'ajout du complexant peut être réalisé avec une concentration de 0,05 à 0,2 mol/L, typiquement d'environ 0,1mol/L (moles de complexant par litre de solution aqueuse) en utilisant de préférence un volume de solution équivalent à celui utilisé avec l'acide ou la base.

A l'issue de cette étape, le réacteur contient un mélange biphasique, avec d'un côté le solvant organique contenant le PVC solubilisé, de l'autre la phase aqueuse contenant le ou les métaux ou composés de métaux et la base ou l'acide.

Cette première méthode permet d'avoir un taux de Pb résiduel dans le PVC inférieur à environ 1000ppm avec un produit initial dont la teneur est comprise entre environ 1000 et environ 20 000 ppm de Pb. Les résultats expérimentaux montrent aussi que le cadmium est extrait avec cette méthode.

Etape b2. Dans un deuxième mode de réalisation de l'étape b., l'extraction des métaux lourds et principalement du plomb est purement physique et utilise la centrifugation. Une fois la dissolution réalisée (et la filtration si-besoin), la solution passe dans une centrifugeuse qui va séparer les métaux lourds du reste de la solution. Suivant une caractéristique, on emploie une centrifugeuse à assiettes. La vitesse de centrifugation peut être ajustée en fonction du métal majoritaire à extraire, par exemple le plomb. Lorsque certains additifs sont plus denses que les composés métalliques à extraire, alors il est possible d'utiliser des centrifugeuses en série pour récupérer les additifs les plus denses en amont et dans une seconde centrifugeuse les métaux lourds. Les additifs extraits pourront ensuite être introduits à nouveau dans le réacteur. Les essais réalisés sur des centrifugeuses de laboratoire montrent une efficacité d'extraction du Pb jusqu'à environ 97% soit une teneur résiduelle de quelques centaines de ppm sur un échantillon avec une teneur initiale entre environ 18000 et environ 16000ppm. Pour réaliser ces essais la force centrifuge relative (Relative Centrifugal Force) appliquée était de 2332G. De la même façon que pour l'extraction du Pb, on note l'efficacité du procédé pour le baryum, qui est retiré avec la même efficacité que le Pb.

Les essais montrent que la viscosité du PVC dissous dans le solvant est importante dans cette méthode d'extraction des métaux, notamment du Pb. Selon une modalité préférée, on procède à la dissolution du PVC dans le solvant MeTHF, à une concentration d'environ 10 à environ 80 g de PVC par litre de solvant /L, préférentiellement entre environ 20 et environ 40g/L. Une fois le PVC dissous, il faut le soumettre à une force centrifuge suffisante, qui est avantageusement d'au moins 2000 G.

Suivant une modalité intéressante, on observe des résultats améliorés lorsque la température du mélange est augmentée (grâce à la diminution de la viscosité). Par exemple, pour un PVC avec initialement 2,0% de Pb dissous à 80g/L, l'extraction du plomb est améliorée de 9% entre une température de 20°C et 80°C.

Le tableau ci-dessous résume les résultats pour ce même PVC avec un taux initial à 2,0% de Pb :

| | Concentration (g/L) | Température (°C) | Perte de masse | Taux de Pb culot | Taux de Pb résiduel PVC | Taux de Pb extrait |
|---|---|---|---|---|---|---|
| A | 10 | 20 | 6,00% | 5,82% | 0,08% | 96% |
| B | 20 | 20 | 11,00% | 10,50% | 0,09% | 96% |
| C | 40 | 20 | 14,00% | 5,60% | 0,22% | 89% |
| D | 60 | 20 | 17,00% | 5,00% | 0,44% | 78% |
| E | 80 | 20 | 23,00% | 3,92% | 0,75% | 63% |
| F | 80 | 80 | 15,50% | 4,58% | 0,57% | 72% |

### Etape c. Précipitation du PVC

On procède ensuite avec l'étape c. à la précipitation du PVC. Notamment, le PVC est précipité avec ses charges. Le procédé permet de retrouver quasiment la composition initiale du compound de PVC à l'exception des stabilisants à base de métaux lourds.

Typiquement, l'ajout d'eau dans le système ne suffit pas à casser la solubilité du PVC avec le MeTHF. Suivant une caractéristique de l'invention, on ajoute un agent compatibilisant permettant d'augmenter la miscibilité de l'eau dans ce solvant. Cet agent doit être miscible ou en partie miscible avec ledit solvant et avec l'eau, ce peut être un alcool. Il peut s'agir notamment de l'isopropanol (CAS : 67-63-0). D'autres comptabilisant comme le 1,3-Dioxolane (CAS n° 646-06-0) et le1,2-dioxolane (CAS n° 4362-13-4) peuvent être utilisés. Eau + agent compatibilisant, ou eau + agent compatibilisant + MeTHF forment la solution précipitante.

On ajuste la concentration de l'agent compatibilisant dans le mélange ternaire afin d'optimiser l'efficacité et la sélectivité de la précipitation. Une concentration favorable d'agent, notamment d'isopropanol, est comprise entre environ 14 et environ 27%, de préférence environ 17 à environ 21% massique par rapport à la masse de solvant initialement introduite pour la dissolution du PVC. Dans le cas ou une partie du distillat est utilisée, il est préférable d'ajuster la concentration de l'agent compatibilisant en tenant compte de la quantité d'agent déjà présente dans le distillat réintroduit. D'après les diagrammes thermodynamiques de mélange ternaire MeTHF-Eau-lsopropanol, on retrouve un azéotrope ternaire avec une concentration à environ 30% massique en isopropanol. C'est cette quantité d'isopropanol qui est à retirer dans la phase de précipitation lorsqu'on calcule l'apport d'isopropanol neuf.

On ajuste la quantité d'eau dans le mélange ternaire afin d'optimiser l'efficacité de la précipitation. Une concentration favorable d'eau est comprise entre environ 19 et environ 31% massique par rapport à la masse de solvant initialement introduite.

On ajuste ensuite la quantité de MeTHF dans le mélange ternaire afin d'optimiser l'efficacité de la précipitation. Une concentration favorable de MeTHF dans le mélange ternaire est comprise entre environ 2 et environ 3% massique par rapport à la masse de solvant initialement introduite. La précipitation est de préférence réalisée par ajout de la solution précipitante directement dans le réacteur agité. L'ajout d'un anti-mousse (quelques millilitres, pour un volume utile de 6L) peut être réalisé pour éviter la formation de mousse sur les opérations suivantes. L'anti-mousse TEGO KE 600 EC (du fournisseur EVONIK) constitué de [1,2-Benzisothiazole-3(2H)-one (CAS : 2634-33-5) et de mélange de réaction 5-chloro-2-méthyl-2H-isothiazol-3-one ; 2-méthyl-2H-isothiazol-3-one (CAS : 55965-84-9)] est un exemple utilisable.

De la vapeur est ajoutée, notamment après introduction du mélange précipitant. Elle va permettre d'apporter des calories dans le réacteur agité et ainsi commencer à faire un stripping des solvants. De plus, la vapeur d'eau va se condenser et enrichir le réacteur d'eau jusqu'à atteindre un équilibre qui va finir de précipiter le polychlorure de vinyle sous forme de grains. Les additifs présents dans la formulation initiale sont réincorporés dans les grains de compound PVC lors de la précipitation à l'exception des métaux lourds.

On préfère procéder par un stripping complet du réacteur en amont de la filtration. Cette opération permet d'assurer l'extraction de la majorité du solvant contenu dans le réacteur. Typiquement le stripping produit un distillat contenant MeTHF, agent compatibilisant et eau (phase organique), tandis que le précipité de PVC (phase solide à teneur résiduelle en MeTHF, agent compatibilisant et eau) est récupéré en fond de réacteur.

Ce stripping facilite les phases ultérieures de traitement du PVC, la manutention de la poudre de PVC qui en sera tirée, mais aussi le traitement du distillat et du filtrat. Le stripping peut être réalisé avec l'apport des calories provenant de la double enveloppe du réacteur et avec l'injection de vapeur d'eau dans le réacteur. Une dépression peut avantageusement être réalisée afin de baisser les points d'ébullition des composés. Il a été constaté que l'apport de calories doit être principalement apporté par la vapeur et que la double enveloppe ne doit préférablement pas excéder une température d'environ 60 ou 75°C. En effet, la température élevée sur les parois du réacteur peut conduire à la formation de croûtes de PVC. La dépression réalisée dans le système peut correspondre à une pression qui est inférieure ou égale à environ 600mbars.abs., notamment comprise entre environ 100 et environ 600mbar.abs. La pression stabilisée à environ 450mbar.abs donne de bon résultats. Cependant, la pression peut être encore inférieure à 450mbars.abs et il est important d'avoir un équilibre entre le débit de vapeur (ainsi que la température de la vapeur) et la pression dans le système. Par exemple, un débit de vapeur d'eau d'environ 1,4kg/h (pour une température de vapeur comprise entre environ 120°C et environ 145°C) pour un réacteur de capacité 6L avec 2,5L de solvant et une dépression à 450mbar.abs permet un stripping en 50min environ. On considère la fin du stripping lorsque la phase aqueuse (alors en majorité dans le réacteur) commence à être distillée. L'injection de vapeur peut alors être arrêtée, la température de la double enveloppe diminuée et la pression remise à la pression atmosphérique.

### Etape d. Séparation entre le solvant et le PVC précipité

La phase suivante d) consiste à la séparation entre, d'une part, une phase liquide contenant du MeTHF, et, d'autre part, un précipité de PVC humide. Ceci peut être réalisé par filtration.

Le procédé peut donc comprendre une filtration permettant de récupérer le PVC purifié du plomb et/ou autres métaux lourds (en quasi-totalité). La filtration peut être réalisée sous vide, par exemple avec un filtre Büchner de laboratoire. A l'échelle industrielle, on préfère filtrer sous pression. Ceci permet de diminuer le temps de filtration, mais aussi d'augmenter l'efficacité de la filtration (par rapport à la filtration sous-vide). La filtration produit un gâteau humide de grains de compound PVC recyclé. Un rinçage à l'eau de ce gâteau est avantageusement réalisé afin d'éviter la reprise possible de métaux dans les porosités des grains de compound PVC.

La phase organique est composée principalement du solvant, ainsi que de l'eau et de l'agent compatibilisant. L'invention décrite prévoit une boucle de recyclage efficace des différents composés, afin d'utiliser le moins de ressource possible et de limiter l'impact environnemental du procédé.

### Etape e. Lavage et séchage du PVC

Le gâteau humide obtenu, préférablement lavé à l'eau, est ensuite séché afin d'obtenir une poudre de compound PVC. Compound PVC est le nom attribué à une formulation PVC, c'est-à-dire la résine PVC à l'état de poudre avec ses additifs mélangés. La poudre issue du procédé de recyclage contient donc directement les additifs (hormis ceux extraits). Compte tenu de l'extraction du stabilisant, il est préférable d'éviter des températures trop importantes lors de l'opération de séchage afin de ne pas dégrader les grains du compound de PVC. Il est possible de jouer sur le temps et la température de séchage pour éviter toute dégradation. La température peut être comprise entre environ 30 et environ 80°C. Lors du séchage, les vapeurs dégagées, qui ont la même composition que le filtrat (hors résidus sec possible), sont ensuite condensées, puis, éventuellement, réintroduites dans la boucle de recyclage des solvants.

La poudre de compound PVC obtenue est alors d'une qualité satisfaisante et peut facilement être de nouveau transformée avec les moyens habituels de la plasturgie à l'instar de l'extrusion. On note que suite à l'extraction des stabilisants, il est nécessaire de refaire une étape de formulation du produit obtenu afin d'ajouter un nouveau stabilisant conforme à la règlementation en vigueur. Donc, le procédé comporte une étape d'ajout de stabilisant dans le PVC, et l'obtention ou de production d'un PVC recyclé stabilisé ou compound PVC recyclé stabilisé, c'est-à-dire contenant un ou plusieurs stabilisants. Par exemple, le procédé prévoit l'ajout d'au moins un stabilisant à base de sels de calcium et de zinc, et/ou à base de sels de calcium éventuellement combiné à des molécules organiques. Par conséquent, la poudre de compound de PVC recyclé peut comprendre un tel stabilisant.

### Régénération et recyclage des produits (e.g. solvant, agent compatibilisant, eau)

Comme il a été dit, le MeTHF peut être avantageusement recyclé. Pour récupérer ce solvant après les étapes de filtration ou de stripping, on procède à la régénération du MeTHF, par séparation du MeTHF de l'eau. On peut employer toute méthode de séparation connue. On peut notamment utiliser une séparation liquide/liquide.

Dans une forme de mise en oeuvre, la régénération comprend également la séparation du MeTHF et de l'agent compatibilisant. On peut employer toute méthode de séparation connue. On peut notamment utiliser une séparation liquide/liquide.

L'objectif est de recycler la totalité ou la majeure partie des solvants, et que la majorité du MeTHF puisse servir à dissoudre le PVC. Mais, si nécessaire, on peut laisser tout ou partie de l'agent compatibilisant, comme l'isopropanol, lors de la dissolution.

Le procédé selon l'invention est illustré de façon non exhaustive dans les exemples suivants, se référant au dessin annexé dans lequel :
**[****Fig 1****]** La Figure 1 présente un schéma bloc simplifié du procédé de l'invention.
**[****Fig 2****]** La Figure 2 présente un schéma bloc d'un procédé selon l'invention, de recyclage du PVC en fin de vie avec l'extraction de plomb à l'aide de MeTHF solvant bio-sourcé.

Pour tous ces exemples, on utilise un réacteur avec une double enveloppe, qui contient des contre-pales, un agitateur turbine 3 pales courbées, et une injection de vapeur dans la partie immergée du réacteur (sous le mobile d'agitation).

Les lettres attribuées aux étapes de procédé le sont de manière propre à chaque figure, et ce de manière indépendante.

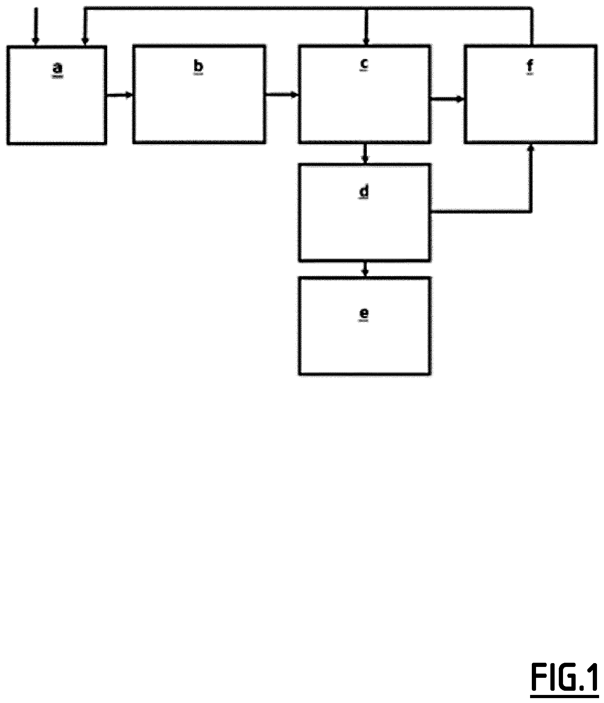

Le schéma bloc de la Figure 1 présente les grandes étapes du procédé :
a) Dissolution du PVC dans le solvant bio-sourcé, le MeTHF ;
b) Extraction des métaux, par solubilisation, éventuellement complexation (e.g. sel d'EDTA), ou par centrifugation;
c) Précipitation du PVC, création de grains de compound PVC recyclé ;
d) Récupération de la poudre compound de PVC recyclé, filtration et séchage ;
e) Obtention d'une poudre de compound PVC recyclé, sans métaux lourds, notamment sans plomb ;
f) Régénération des solvants des étapes c) et d), par séparation liquide/liquide et réintroduction dans le procédé.

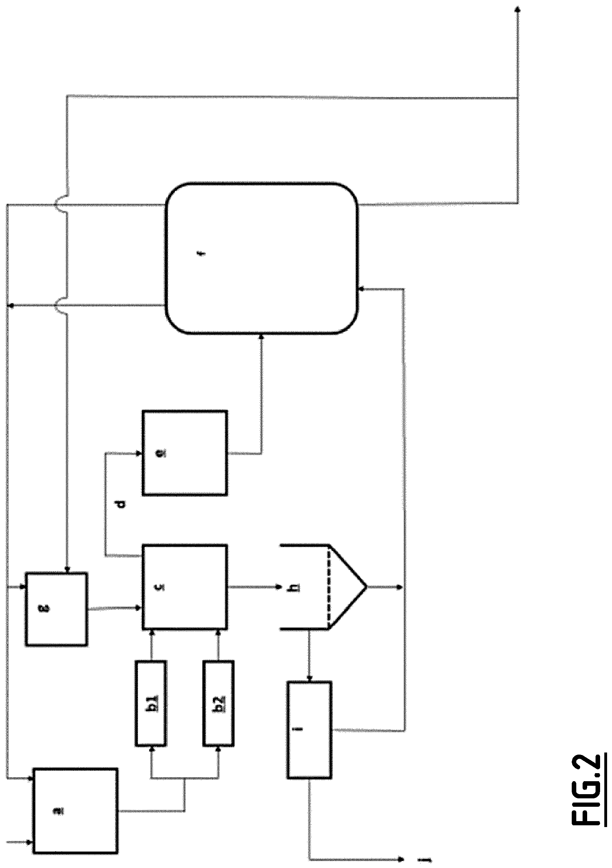

Le schéma bloc de la Figure 2 présente les étapes d'un procédé optimisé :
a) Dissolution du PVC dans le MeTHF ;
b) Extraction des métaux, par solubilisation b1), puis éventuellement complexation (e.g. sel d'EDTA), ou par centrifugation b2);
c) Précipitation du PVC à l'aide d'un mélange d'eau et d'isopropanol, et avec la boucle de recyclage, c'est un mélange précipitant g) eau, isopropanol et MeTHF qui est introduit dans le réacteur pour provoquer la précipitation ;
d) Un stripping est réalisé dans c) pour favoriser la précipitation en retirant :
e) une phase organique e) formée de MeTHF, isopropanol et eau (phase organique majoritaire);
f) Cette phase e) passe ensuite dans une étape de régénération dite « régénération des solvants » f), par séparation liquide/liquide, permettant de récupérer et recycler MeTHF et isopropanol dans le procédé, en étape a) et/ou dans le mélange précipitant g) et de retirer l'eau ou de la recycler dans le mélange précipitant g);
g) Mélange précipitant ;
h) Passage sur filtre du mélange du PVC solide humide issu de la précipitation, et du mélange ternaire résiduel eau-MeTHF-isopropanol, récupération de la poudre compound de PVC recyclé, retrait du filtrat (phase aqueuse majoritaire) en pied de filtre et envoi de ce dernier à l'étape de régénération f) permettant de séparer et recycler MeTHF et isopropanol dans le procédé, en étape a) et/ou dans le mélange précipitant g), et de retirer l'eau ou de la recycler dans le mélange précipitant g);
i) Le compound PVC humide, sans métaux lourds, notamment sans plomb est ensuite séché;
j) On récupère un compound de PVC recyclé ;

A noter que le recyclage du MeTHF, de l'isopropanol et de l'eau se fait de manière quantitative, ce qui signifie que l'on réintroduit des quantités connues correspondant aux besoins du procédé semi-continu.

### Exemple n°1 :

On ajoute environ 2,5L de solvant MeTHF bio-sourcé dans le réacteur soit environ 2,2kg de solvant et on ajoute 215g de solution issue du stripping d'une opération précédente c'est-à-dire à composition azéotropique du mélange ternaire eau-MeTHF-Isopropanol (respectivement à 9%-81%-10% massique). Ceci donne le mélange solvant ou solvant dans l'exemple.

Le PVC choisi pour cet exemple est un PVC provenant de produits PVC rigide en fin de vie issus de la déconstruction d'un bâtiment, avec des stabilisants comportant 14 000ppm de Pb, 266ppm de Cd, des charges TiO₂ (le titane est mesuré à 1,9%), du CaCOs, ainsi que d'autres additifs utilisés dans la formulation du PVC rigide. Le PVC se trouve sous la forme de poudre micronisée. Une partie de ce PVC micronisé est conservée comme Témoin n°1.

On introduit 250g de PVC dans le réacteur agité (à 600trs/min) avec le solvant et on chauffe le réacteur avec sa double enveloppe à une consigne de 75°C pour dissoudre le PVC.

On laisse dissoudre le PVC pendant 60min, avant de diminuer la consigne de température de la double enveloppe à 60°C. On ajoute 500mL de solution de soude à 1,5mol/L. On attend 15min et on ajoute 500mL de solution de sels tri- et tétrasodique d'EDTA à 0,1mol/L (50%/50%molaire entre EDTA.Na₃ numéro CAS.150-38-9 et EDTA.Na₄ numéro CAS.64-02-8), et on laisse agir 15min.

On ajoute ensuite le mélange précipitant servant à passer le PVC sous forme solide, en conservant le réacteur sous agitation à une température de 60°C. Le mélange est composé de 400g d'isopropanol, de 550g d'eau, de 50g de MeTHF et de 5mL d'anti-mousse TEGO KE 600 EC.

Dès que le mélange précipitant a été ajouté, on commence l'étape de stripping à l'aide d'une injection de vapeur dans le réacteur à environ 1,2kg/h et on passe la consigne de la double enveloppe à 65°C.

Pour le stripping, un vide à 500mbar.abs (bar absolu) est réalisé. La phase organique va alors s'évaporer et être condensée sur la colonne de refroidissement pour être récupérée dans un ballon séparé du réacteur.

Une fois la température de 75-80°C atteinte (selon la stabilité du vide réalisé), la vapeur est arrêtée tout comme la chauffe de la double enveloppe et la pression est remontée jusqu'à la pression atmosphérique.

Le contenu du réacteur est vidangé dans un filtre Büchner mis sous vide, le gâteau humide obtenu est alors séché en étuve environ 16h à 70°C afin d'obtenir la poudre de compound PVC sans plomb (voir résultats).

### Exemple n°2 :

On ajoute 1,08kg de solvant MeTHF, et on ajoute 913g de solution issue du stripping d'une opération précédente c'est-à-dire à composition azéotropique du mélange ternaire eau-MeTHF-lsopropanol (respectivement à 9%-81%-10% massique). Ceci donne le mélange solvant ou solvant dans l'exemple.

Le PVC choisi pour cet exemple est un PVC rigide sous forme de granulés qui ont été réalisés au Laboratoire d'Application Plastique de KEM ONE Saint-Fons. La formulation est typique de celle utilisée pour les profilés fenêtres avec des stabilisants comportant 20 000ppm de Pb, des charges TiO₂ (le titane est mesuré à 1,9%), du CaCOs, et autres composés utilisés dans la formulation du PVC rigide. Une partie de ce PVC en granulés est conservée comme Témoin n°2.

On introduit 250g de PVC dans le réacteur agité (à 600trs/min) avec le mélange solvant et on chauffe le réacteur avec sa double enveloppe à une consigne de 75°C pour dissoudre le PVC.

On laisse dissoudre le PVC pendant 100min, avant de diminuer la consigne de température de la double enveloppe à 60°C. On ajoute 500mL de solution de soude à 1,5mol/L, on attend 10min et on ajoute 500mL de solution de sels tri- et tétrasodique d'EDTA à 0,1 mol/L (idem exemple 1), et on laisse agir 10min.

On ajoute ensuite le mélange précipitant servant à précipiter le PVC sous forme solide, en conservant le réacteur sous agitation à une température de 60°C. Le mélange est composé de 300g d'isopropanol, de 640g d'eau, de 50g de MeTHF et de 5mL d'anti-mousse TEGO KE 600 EC.

Dès que le mélange précipitant a été ajouté, on commence l'étape de stripping à l'aide d'une injection de vapeur dans le réacteur à environ 1,2kg/h et on passe la consigne de la double enveloppe à 65°C.

Pour le stripping, un vide à 500mbar.abs est réalisé. La phase organique va alors s'évaporer et être condensée sur la colonne de refroidissement pour être récupérée dans un ballon séparé du réacteur.

Une fois la température de 75-80°C atteinte (selon la stabilité du vide réalisé), la vapeur est arrêtée, la chauffe de la double enveloppe aussi et la pression est remontée jusqu'à la pression atmosphérique.

Le contenu du réacteur est vidangé dans un filtre Büchner mis sous vide, le gâteau humide obtenu est alors séché en étuve environ 16h à 70°C afin d'obtenir la poudre de compound PVC sans plomb (voir résultats).

### Exemple n°3 :

Le PVC choisi pour cet exemple est un PVC provenant de produits PVC rigide fin de vie issue de la déconstruction de bâtiment, avec des stabilisants comportant 14 000ppm de Pb, 266ppm de Cd, des charges TiO₂ (le titane est mesuré à 1,9%), du CaCOs, et autres composés utilisés dans la formulation du PVC rigide. Le PVC se trouve sous la forme de poudre micronisé. Une partie de ce PVC micronisé est conservée comme Témoin n°3.

On introduit 280g de PVC dans le réacteur agité (à 600trs/min) avec 2,2kg de MeTHF (le solvant) et on chauffe le réacteur avec sa double enveloppe à une consigne de 75°C pour dissoudre le PVC.

On laisse dissoudre le PVC pendant 80min, avant de diminuer la consigne de température de la double enveloppe à 60°C. On ajoute 500mL de solution de soude à 1,5mol/L, on attend 10min et on ajoute 500mL d'eau.

On ajoute ensuite le mélange précipitant servant à passer le PVC sous forme solide, en conservant le réacteur sous agitation à une température de 60°C. Le mélange est composé de 400g d'isopropanol, de 550g d'eau, de 50g de MeTHF et de 5mL d'anti-mousse TEGO KE 600 EC et de 220g issu du stripping d'une opération précédente c'est-à-dire à composition azéotropique du mélange ternaire eau-MeTHF-lsopropanol (respectivement à 9%-81%-10% massique).

Dès que le mélange précipitant a été ajouté, on commence l'étape de stripping à l'aide d'une injection de vapeur dans le réacteur à environ 1,2kg/h et on passe la consigne de la double enveloppe à 65°C.

Pour le stripping un vide à 450mbar.abs est réalisé. La phase organique va alors s'évaporer et être condensée sur la colonne de refroidissement pour être récupérée dans un ballon séparé du réacteur.

Une fois la température de 75-80°C atteinte (selon la stabilité du vide réalisé), la vapeur est arrêtée, la chauffe de la double enveloppe aussi et la pression est remontée jusqu'à la pression atmosphérique.

Le contenu du réacteur est vidangé dans un filtre Büchner mis sous vide, le gâteau humide obtenu est alors séché en étuve environ 16h à 70°C afin d'obtenir la poudre de compound PVC sans plomb (voir résultats).

### Résultats :

La mesure de DHC est une mesure de déshydrochloration, spécifique au PVC. La mesure donne un temps qui indique la dégradation du PVC (le dégagement d'HCl liée à la dégradation du PVC va modifier la conductivité d'une solution aqueuse et c'est cette variation qui est mesurée). Cette valeur est directement liée à la quantité de stabilisant dans le PVC et plus particulièrement la quantité de Pb dans les exemples.

La mesure ICP (Unductively Coupled Plasma) est une mesure directe du taux des métaux (après une préparation d'échantillon).

**[Table 1]**

| | | Exemple n° | | | Témoin n° | |
|---|---|---|---|---|---|---|
| | | 1 | 2 | 3 | 1 & 3 (micronisé) | 2 (granulés) |
| ICP (ppm) | Pb | 615 | 411 | 1700 | 14000 | 20000 |
| | Cd | Pas identifié | Pas identifié | 427* | 266 | 0 |
| DHC (min) | | 8,11 | 9,01 | 9,81 | 46,50 | 64,65 |

| | | | | | | |
|---|---|---|---|---|---|---|
| ** La quantité de Cd dans l'échantillon avant traitement est mesurée plus faible à cause de l'incertitude de mesure sur des quantités faibles en Cd, mais aussi à cause du prélèvement d'échantillon qui peut varier avec des produits recyclés.* | | | | | | |

## Revendications

1. Procédé d'épuration d'un polymère de chlorure de vinyle (PVC) comprenant au moins un composé d'un métal lourd, tel que le plomb, selon lequel :
a. on met le PVC en solution dans le 2-Méthyl-Tétrahydrofurane (MeTHF) dans un réacteur agité;
b. on effectue un traitement qui conduit à la séparation des métaux lourds de la solution de PVC ;
c. on provoque la précipitation du PVC par ajout à la solution de PVC d'un mélange précipitant comprenant de l'eau et un agent compatibilisant, cet agent augmentant la miscibilité de l'eau dans le MeTHF,
d. on récupère un gâteau de PVC précipité épuré du composé de métal lourd.

2. Procédé selon la revendication 1, dans lequel, à l'étape a., on introduit du PVC dans le réacteur agité à raison de 1 à 20 % massique par rapport au solvant MeTHF.

3. Procédé selon la revendication 1 ou 2, dans lequel l'étape b. comprend l'introduction dans le réacteur agité d'une solution aqueuse de base ou d'acide, de préférence de 0,8 à 2,0mol/L, conduisant à la formation d'une phase aqueuse séparée de la solution de PVC et dans laquelle le composé de métal lourd est solubilisé.

4. Procédé selon la revendication 3, dans lequel l'acide est HCl et la base est NaOH.

5. Procédé selon la revendication 3 ou 4, dans lequel un complexant, de préférence un ou des sels d'acide éthylène diaminetétra-acétique, est ajouté à l'étape b.

6. Procédé selon la revendication 1, dans lequel, à l'étape a., on introduit du PVC dans le réacteur agité pour le dissoudre dans le solvant, le PVC étant à une concentration allant d'environ 10 à environ 80 g/L, de préférence d'environ 20 à environ 40 g/L, par rapport au solvant.

7. Procédé selon la revendication 1 ou 6, dans lequel l'étape b. comprend une centrifugation permettant de séparer le composé de métal lourd de la solution de PVC, la centrifugation étant réalisée sous une force d'au moins 2000 G.

8. Procédé selon l'une quelconque des revendications précédentes, dans lequel l'agent compatibilisant à l'étape c. est l'isopropanol, de préférence à raison de 18 à 27% massique par rapport au solvant MeTHF.

9. Procédé selon l'une quelconque des revendications précédentes, dans lequel à l'étape c. on effectue un stripping du réacteur permettant de récupérer, d'une part, un distillat de MeTHF, d'agent compatibilisant et d'eau, et, d'autre part, un précipité humide de PVC contenant des teneurs résiduelles en eau, MeTHF et/ou agent compatibilisant.

10. Procédé selon la revendication 9, dans lequel le précipité humide est ensuite lavé avec de l'eau, puis séché.

11. Procédé selon la revendication 9 ensemble la revendication 8, dans lequel on procède à la séparation du MeTHF, de l'isopropanol et de l'eau à partir du distillat, et du recyclage de tout ou partie du MeTHF, et éventuellement de l'isopropanol et de l'eau, dans le procédé.

12. Procédé selon l'une quelconque des revendications 1 à 9, dans lequel le gâteau de PVC ou le précipité humide de PVC est séché, l'on obtient une poudre de PVC ou de compound de PVC.

13. Procédé selon la revendication 12, dans lequel l'on formule cette poudre de PVC ou de compound de PVC par ajout d'un stabilisant, et l'on produit un PVC recyclé stabilisé.

## Patentansprüche

1. Verfahren zur Reinigung eines Vinylchlorid (PVC)-Polymers, das mindestens eine Verbindung eines Schwermetalls, wie z. B. Blei, enthält, wobei:
a. das PVC in einem Rührreaktor in 2-Methyltetrahydrofuran (MeTHF) gelöst wird;
b. eine Behandlung durchgeführt wird, die zur Abtrennung der Schwermetalle aus der PVC-Lösung führt;
c. die Ausfällung von PVC durch Zugabe einer Fällungsmischung, die Wasser und ein Kompatibilisierungsmittel umfasst, zu der PVC-Lösung bewirkt wird, wobei das Mittel die Mischbarkeit von Wasser in MeTHF erhöht,
d. ein von der Schwermetallverbindung gereinigter ausgefällter PVC-Kuchen gewonnen wird.

2. Verfahren nach Anspruch 1, bei dem in Schritt a. PVC in einer Menge von 1 bis 20 Massenprozent, bezogen auf das Lösungsmittel MeTHF, in den Rührreaktor eingebracht wird.

3. Verfahren nach Anspruch 1 oder 2, wobei Schritt b. die Einführung einer wässrigen Lösung einer Base oder Säure, vorzugsweise von 0,8 bis 2,0 mol/L, in den Rührreaktor umfasst, was zur Bildung einer wässrigen Phase führt, die von der PVC-Lösung getrennt ist und in der die Schwermetallverbindung aufgelöst wird.

4. Verfahren nach Anspruch 3, wobei die Säure HCl und die Base NaOH ist.

5. Verfahren nach Anspruch 3 oder 4, wobei in Schritt b ein Komplexbildner, vorzugsweise ein oder mehrere Salze der Ethylendiamintetraessigsäure, zugegeben wird.

6. Verfahren nach Anspruch 1, bei dem in Schritt a. PVC in den Rührreaktor eingebracht wird, um es in dem Lösungsmittel zu lösen, wobei das PVC in einer Konzentration von etwa 10 bis etwa 80 g/L, vorzugsweise etwa 20 bis etwa 40 g/L, bezogen auf das Lösungsmittel, vorliegt.

7. Verfahren nach Anspruch 1 oder 6, wobei Schritt b. ein Zentrifugieren umfasst, um die Schwermetallverbindung von der PVC-Lösung zu trennen, wobei das Zentrifugieren unter einer Kraft von mindestens 2000 G durchgeführt wird.

8. Verfahren nach einem der vorhergehenden Ansprüche, wobei das Kompatibilisierungsmittel in Schritt c. Isopropanol ist, vorzugsweise in einer Menge von 18 bis 27 Massenprozent, bezogen auf das Lösungsmittel MeTHF.

9. Verfahren nach einem der vorhergehenden Ansprüche, bei dem in Schritt c. ein Strippen des Reaktors durchgeführt wird, wodurch einerseits ein Destillat aus MeTHF, Kompatibilisierungsmittel und Wasser und andererseits ein feuchter PVC-Niederschlag, der Restgehalte an Wasser, MeTHF und/oder Kompatibilisierungsmittel enthält, gewonnen werden kann.

10. Verfahren nach Anspruch 9, bei dem der feuchte Niederschlag anschließend mit Wasser gewaschen und dann getrocknet wird.

11. Verfahren nach Anspruch 9 gemeinsam mit Anspruch 8, bei dem MeTHF, Isopropanol und Wasser aus dem Destillat abgetrennt werden und das gesamte oder ein Teil des MeTHF und gegebenenfalls das Isopropanol und das Wasser in das Verfahren zurückgeführt werden.

12. Verfahren nach einem der Ansprüche 1 bis 9, bei dem der PVC-Kuchen oder der feuchte PVC-Niederschlag getrocknet wird, wobei ein PVC-Pulver oder PVC-Compound erhalten wird.

13. Verfahren nach Anspruch 12, bei dem man dieses PVC-Pulver oder PVC-Compound durch Zugabe eines Stabilisators formuliert und ein stabilisiertes recyceltes PVC herstellt.

## Claims

1. A process for purifying a vinyl chloride (PVC) polymer comprising at least one compound of a heavy metal, such as lead, according to which:
a. PVC is dissolved in 2-Methyl-Tetrahydrofuran (MeTHF) in a stirred reactor;
b. a process is carried out to separate the heavy metals from the PVC solution;
c. the PVC is precipitated by adding to the PVC solution a precipitating mixture comprising water and a compatibilising agent, this agent increasing the miscibility of the water in MeTHF,
d. a cake of precipitated PVC purified of the heavy metal compound is recovered.

2. A process according to claim 1, in which, in step a., PVC is introduced into the stirred reactor in a proportion of 1 to 20% by weight relative to the solvent MeTHF.

3. A process according to claim 1 or 2, wherein step b. comprises introducing into the stirred reactor an aqueous solution of base or acid, preferably from 0.8 to 2.0 mol/L, leading to the formation of an aqueous phase separate from the PVC solution and in which the heavy metal compound is solubilised.

4. A process according to claim 3, in which the acid is HCl and the base is NaOH.

5. A process according to claim 3 or 4, in which a complexing agent, preferably a salt or salts of ethylenediaminetetraacetic acid, is added to step b.

6. A process according to claim 1, in which, in step a., PVC is introduced into the stirred reactor in order to dissolve it in the solvent, the PVC being at a concentration ranging from about 10 to about 80 g/L, preferably from about 20 to about 40 g/L, relative to the solvent.

7. A process according to claim 1 or 6, wherein step b. comprises centrifugation to separate the heavy metal compound from the PVC solution, the centrifugation being carried out under a force of at least 2,000 G.

8. A process according to any one of the preceding claims, in which the compatibilising agent in step c. is isopropanol, preferably in an amount of 18 to 27% by weight relative to the solvent MeTHF.

9. A process according to any one of the preceding claims, in which in step c. the reactor is stripped to recover, on the one hand, a distillate of MeTHF, compatibilising agent and water and, on the other hand, a wet PVC precipitate containing residual contents of water, MeTHF and/or compatibilising agent.

10. A process according to claim 9, in which the wet precipitate is then washed with water and dried.

11. A process according to claim 9 together with claim 8, in which MeTHF, isopropanol and water are separated from the distillate, and all or some of the MeTHF, and optionally the isopropanol and water, are recycled to the process.

12. A process according to any one of claims 1 to 9, in which the PVC cake or the wet PVC precipitate is dried, a PVC or PVC compound powder is obtained.

13. A process according to claim 12, in which this PVC or PVC compound powder is formulated by adding a stabiliser, and a stabilised recycled PVC is produced.
